# EUROPEAN PATENT APPLICATION

(11) **EP 2 015 060 A1**
(43) Date of publication of application: **14.01.2009**
(21) Application number: 08159789.0
(22) Date of filing: 07.07.2008
(51) Int. Cl.: G01N 27/22, A01G 25/16

(54) **Measuring device for determining a water content**

(30) Priority: 11.07.2007 DK 200701025
(71) Applicant: Senmatic A/S, 5471 Sonderso (DK)
(72) Inventor: Ehrhorn, Kristian, 5260, Odense S (DK)
(74) Representative: Hoffmann, Claus

(57) **Abstract**

The present invention relates to a measuring device (1) for determining a water content in a moist plant growth medium (2), said moist plant growth medium (2) being enclosed in a cover (3), said cover (3) comprising an inner side which is in contact with said moist plant growth medium (2). The measuring device (1) comprises a capacitor (9) having a capacitance, said capacitor (9) comprising a first electrode (4), a second electrode (5) and a dielectric material, and a processing unit (6). Furthermore, the first electrode (4) has a surface isolation (8) and is permanently positioned in said moist plant growth medium (2), said cover (3) comprising an electrically conductive material and said second electrode (5) being the electrically conductive material, and said dielectric material comprising at least the surface isolation (8) of the first electrode (4) and the moist plant growth medium (2), whereby said moisture dependent capacitance of the capacitor (9) is a function of the water content absorbed in the moist plant growth medium (2) nearby and/or along the first electrode (4).

## Description

### Technical field of the invention

The present invention relates to a measuring device for determining a water content in a moist plant growth medium, said moist plant growth medium being enclosed in a cover, said cover comprising an inner side which is in contact with said moist plant growth medium, said measuring device comprising a capacitor having a capacitance, said capacitor comprising a first electrode, a second electrode and a dielectric material, and a processing unit.

The present invention also relates to a moist plant growth medium as well as to a method for manufacturing said moist plant growth medium.

The present invention furthermore relates to an irrigation system for irrigating individual plants or a group of plants growing in moist plant growth media.

### Background art

In greenhouses wherein plants are grown and kept for a period of time, there are many parameters which influence on giving the specific plant its best growth conditions as well as yield, if the plants are culture plants. These parameters may be temperatures, humidity, sun light, artificial light, moisture in the environment surrounding the plants, irrigation, water content in the plant growth media (i.e. soil or artificial soil), ventilation, fertilizer, minerals, carbon dioxide, etc. Thus, the manufacturer of plants or yield from plants always seeks to optimize their production environment as well as to get the highest return on investment.

Especially, there is a need for measuring and controlling the water content in the plant growth media for providing the best possible growth conditions for plants. This is in particular the case if the plants are culture plants, such as tomato plants or others, which are aimed at giving a high yield in its entire productive life. Thus, much effort is dedicated to finding the optimum way to measure and control the water content in the plant growth media.

Often the plants are placed in moist plant growth media, wherein they grow and are irrigated as well as given nutrition dissolved in the irrigation water. The moist plant growth media are enclosed in a cover. These moist plant growth media are often referred to as "slabs" in the art.

In the prior art, devices and systems for measuring and determining the water content in moist plant growth media are known. The devices and systems comprise at least two electrodes in the form of needles, so that they can be inserted through the cover into the moist plant growth media from the outside. Sometimes they have a plurality of needles. For measuring the water content, the electrodes are parts of a capacitor and the water content is determined on basis of the capacitance of the capacitor, see e.g. EP 0 392 639 A2 or GB 709,177.

These devices and systems are expensive, so often one sensor is used for measuring the water content in several slabs one at a time. During use of the known devices and systems, the needles (i.e. electrodes) are inserted through the cover into the moist plant growth medium, wherein the capacitance is determined between the electrodes and thereby the water content at the specific place where the electrodes have been inserted, a so-called spot measurement. If a larger area is to be measured, it is necessary to insert the needles again or to have more devices which are to be inserted at the same time. Furthermore, when the needles are inserted through the cover, holes in the cover are created, which have the disadvantage that it may be difficult to control the environment inside the cover. Also, when the needles are inserted into the moist plant growth medium they may damage the roots of the plants.

As the water concentration is unevenly distributed in the slabs with more water at the bottom and less at the top of the slab, it is important for the measurement that the measuring electrodes are inserted correctly at each measurement in order to make reliable measurements. This means that the result of the measurements is very dependent of the skills of the operator, which in practice limits the value of the system.

Additionally, it has been observed that the known devices are not always only measuring between the electrodes but also in the adjacent area. This may be an advantage as a larger area is being measured; however, it is often a disadvantage as the adjacent area may be considerably larger than expected. In fact the area may be outside the slab. Thus, the obtained measurement may have a misleading result, and thereby the subsequently irrigation may also be performed on the misleading result.

There is thus a need for providing a measuring device which is reliable during use, which is inexpensive to manufacture, which measures in a well-defined area in the slab, which is suitable for permanent continuous measurement, which needs no or very little service, which is easy to use and which gives the manufacturer of the plants a high return on investment.

### Summary of the invention

An object of the present invention is to wholly or partly overcome the above disadvantages and drawbacks of the prior art. More specifically, it is an object to provide a measuring device which has the lifetime of a slab, is easy to use as well as being inexpensive to manufacture.

It is also an object of the present invention to provide a measuring device which measures permanently in a well-defined area.

It is furthermore an object of the present invention to provide a moist plant growth medium for use in connection with a measuring device.

Additionally, it is an object of the present invention to provide a method for manufacturing a moist plant growth medium.

It is as well an object of the present invention to provide an irrigation system for irrigating individual plants or a group of plants growing in moist plant growth media.

The above objects, together with numerous other objects, advantages and features, which will become evident from the below description, are accomplished by a solution in accordance with the present invention by said first electrode having a surface isolation and being permanently positioned in said moist plant growth medium, said cover comprising an electrically conductive material and said second electrode being the electrically conductive material, and said dielectric material comprising at least the surface isolation of the first electrode and the moist plant growth medium, whereby said moisture dependent capacitance of the capacitor is a function of the water content absorbed in the moist plant growth medium nearby and/or along the first electrode.

Hereby a measuring device is obtained which is reliable to use as it measures in a well-defined volume between the electrodes. Furthermore, the measuring device is easy to use and the electrodes need not to be inserted through the cover into the moist plant growth medium as they are already part of and placed in the moist plant growth medium. Additionally, the measuring device is inexpensive to manufacture so that each moist plant growth medium may have a measuring device connected at all time and it may be used as a one-way system so that it is disposed after use.

According to the invention, the first electrode may have a predetermined length, so that a variable electric capacity inside the moist plant growth medium, which the first electrode is in contact with, is created and is measurable.

Also according to the invention, the first electrode may be positioned in said moist plant growth medium by embedding, sewing, laying, screwing, pinching, etc.

According to the invention, the first electrode may be positioned in the moist plant growth medium in a predetermined pattern, such as hairpin-slings, meander, zigzag, spiral, coil or similar two- and 3-dimensional patterns or combinations of these patterns.

According to the invention, the first electrode may be embedded and evenly distributed inside the moist plant growth medium, or selectively concentrated in selected areas of the moist plant growth medium.

According to the invention, the first electrode may have a circular, oval, polyangular or rectangular cross section.

According to the invention, the surface isolation of the first electrode may be made of insulating dielectric materials used for wire insulation, such as for instance lacquer, Teflon, polyurethane or the like.

According to the invention, the processing unit may be a multivibrator or oscillator, and said capacitance is an active component in said multivibrator or oscillator so that a frequency of oscillation or a pulse width of a digital output, is a function of the capacitance of said capacitor, which also is a function of the water content in the moist plant growth medium.

According to the invention, the moist plant growth medium may be made of natural soil or artificial material, such as mineral wool or glass wool.

According to the invention, the second electrode may be arranged on the inner side of the cover, on the outer side of the cover or within the cover. Especially, when the second electrode is arranged on the outer side of the cover or within the cover the inner side of the cover is part of the dielectric material and thereby provides isolation of the second electrode.

According to the invention, the electrically conductive material may be made of aluminium, nickel, cupper, carbon or alloys of metals which are resistant to corrosion from the irrigation water and nutritients.

According to the invention, the cover may be made of an impermeable material, such as polymer, for instance polyethylene, polypropylene, polyester, polycarbonate or similar materials which may be extruded to a thin plastic foil.

According to another aspect, the present invention also relates to a moist plant growth medium, said moist plant growth medium being enclosed in a cover, said cover comprising an inner side which is in contact with said moist plant growth medium, said moist plant growth medium comprising a capacitor having a capacitance, said capacitor comprising a first electrode, a second electrode and dielectric material, wherein said first electrode has a surface isolation and is permanently positioned in said moist plant growth medium, said cover comprising an electrically conductive material and the second electrode being the electrically conductive material, and said dielectric material comprising at least the surface isolation of the first electrode and the moist plant growth medium.

According to the invention, the first electrode may be embedded and evenly distributed inside the moist plant growth medium, or selectively concentrated in selected areas of the moist plant growth medium.

According to the invention, the surface isolation of the first electrode may be made of insulating dielectric materials used for wire insulation, such as for instance lacquer, Teflon, polyurethane or the like.

According to the invention, the moist plant growth medium may be made of natural soil or artificial material, such as mineral wool, glass wool or similar.

Furthermore, the second electrode may be arranged on the inner side of the cover, on the outer side of the cover or within the cover.

Also according to the invention, the electrically conductive material may be made of aluminium, nickel, cupper, carbon or similar conductive materials.

According to the invention, the cover may be made of an impermeable material, such as polymer, for instance polyethylene, polypropylene, polyester, polycarbonate or similar materials which may be extruded to a thin plastic foil.

The present invention also relates to a method for manufacturing a moist plant growth medium, said method comprising the steps of:
- providing the moist plant growth medium with a predetermined size and volume,
- positioning a first electrode having a surface isolation in the moist plant growth medium,
- enclosing the moist plant growth medium inside a cover so that an inner side of the cover is in contact with the moist plant growth medium, said cover comprising a conductive material, and
- closing the cover for instance by thermo welding.

According to an additional aspect, the present invention also relates to an irrigation system for irrigating individual plants or a group of plants growing in moist plant growth media, wherein the irrigation is controlled selectively by an irrigation controller, said irrigation controller being adapted to controlling a supply of water and fertilizer to individual plants or groups of plants in view of a water content measured in the moist plant growth medium of an individual plant, or in the case where the measurement by one plant is representative for a group of plants, for the water content in this group of plants, said system comprises a measuring device according to the present invention.

According to the invention, the measuring device may be connected to the irrigation controller by wireless or wired connection.

According to the invention, the wireless connection may comprise a local wireless transmitter and repeater making a wireless node, said wireless node transmitting, either directly or via other similar wireless nodes, measuring signals with information of the water content, to a central wireless access point connected to the irrigation controller.

According to the invention, said wireless nodes may be battery powered for easier and more flexible installation of the nodes.

According to the invention, one or more sensors may be arranged in connection with the moist plant growth media, and they are connected to the irrigation controller, said sensors being arranged for measuring the electric conductivity of the humidity of an environment surrounding the moist plant growth media, for measuring the temperature and/or for measuring the strength of the sun light.

### Brief description of the drawings

The invention and its many advantages will be described in more detail below with reference to the accompanying schematic drawings, which for the purpose of illustration show some non-limiting embodiments and in which
- Fig. 1: shows schematically a measuring device according to the invention,
- Fig. 2: shows a part of a first electrode,
- Fig. 3: shows schematically a moist plant growth medium in a sectional view,
- Fig. 4: shows schematically the capacitor of the measuring device, and
- Fig. 5: shows schematically an irrigation system according to the invention.

All the figures are highly schematic and not necessarily to scale, and they show only parts which are necessary in order to elucidate the invention, other parts being omitted or merely suggested.

### Description of preferred embodiments

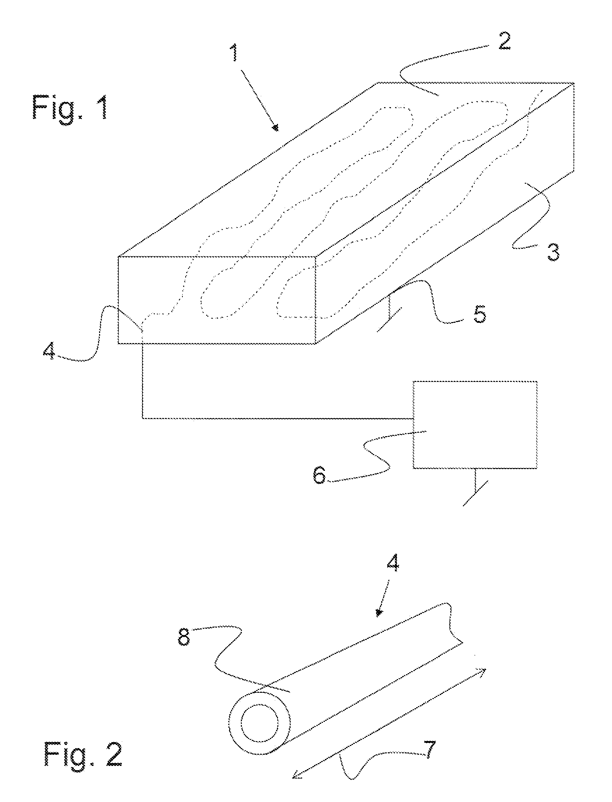

In Fig. 1 a measuring device 1 according to the invention is shown schematically. The measuring device 1 is adapted for determining a water content in a moist plant growth medium 2, said moist plant growth medium 2 being enclosed in a cover 3. The cover 3 comprises an inner side (not shown) which is in contact with said moist plant growth medium 2, said cover comprising an electrically conductive material. The measuring device 1 comprises a capacitor having a capacitance, said capacitor comprising a first electrode 4, said first electrode 4 having a surface isolation and being permanently positioned in said moist plant growth medium 2. The capacitor furthermore comprises a second electrode 5 and said second electrode 5 being the conductive side of said cover 3, i.e. the electrically conductive material. The second electrode may be arranged on the inner side of the cover, on the outer side of the cover or it may be within the cover. The capacitor also comprises a dielectric material, said dielectric material comprising at least the surface isolation of the first electrode 4 and the moist plant growth medium 2; however, the none conductive inner side of the cover, in the case where the conductive layer of the cover is on the outside or within the cover, may as well be part of the dielectric material. Additionally, the measuring device 1 comprises a processing unit 6.

During operation of the measuring device 1 the water content of the moist plant growth medium will influence the dielectric coefficient internally in the moist plant growth medium so that the capacity of the electrode is a function of the water content, whereby the capacitance of the capacitor is a function of the water content absorbed in the moist plant growth medium nearby and/or along the first electrode.

The first electrode 4 is preferably positioned inside the moist plant growth medium 2 in a predetermined pattern, such as hairpin-slings, meander, zigzag, spiral, coil or similar two-and 3-dimensional patterns or combinations of these patterns so that a substantial part of the entire volume of the moist plant growth media is in contact with the first electrode 4 whereby its capacitance reflects the average humidity in the moist plant growth medium 2. Advantageously, the first electrode 4 may be embedded and evenly distributed inside the moist plant growth medium 2, or selectively concentrated in selected areas of the moist plant growth medium 2.

In Fig. 2 an embodiment of the first electrode 4 is shown. The first electrode 4 has a circular configuration seen in cross sectional view. According to the invention, the first electrode 4 may as well have oval, polyangular or rectangular cross section. Preferably the first electrode 4 has a predetermined length 7, so that a variable electric capacity inside the moist plant growth medium, which the first electrode 4 is in contact with, is created and is measurable. The first electrode 4 has a surface isolation 8. The surface isolation 8 may be made of insulating dielectric materials used for wire insulation, such as for instance lacquer, Teflon, polyurethane or the like and constitutes a part of the dielectric material of the capacitor. Other physical shapes and types of electrodes may also be developed having the same function.

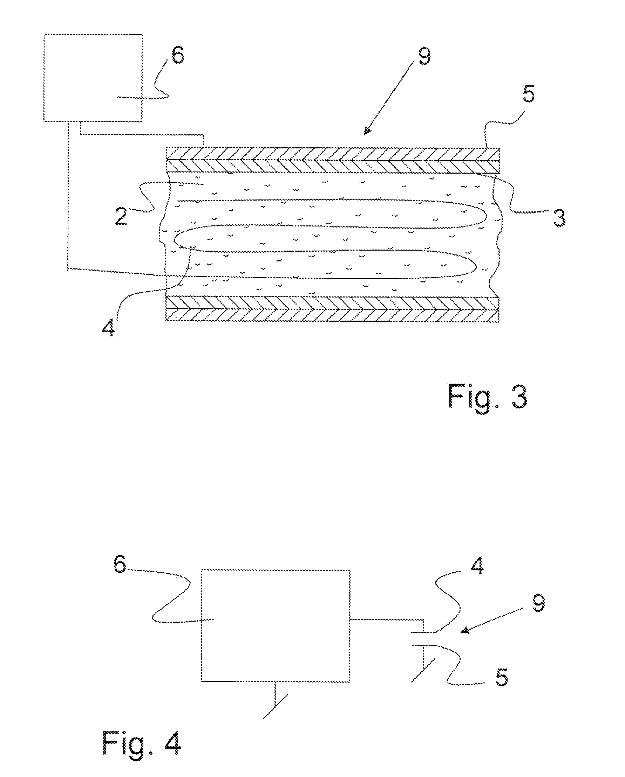

In Fig. 3 one embodiment of the moist plant growth medium 2 is shown in a cross sectional view. The capacitor 9 comprises in this embodiment the first electrode 4 placed inside the moist plant growth medium 2, the second electrode 5, which is made of an electrically conductive material and is placed on the outer side of the cover 3, and the dielectric material which in this embodiment is constituted by the moist plant growth medium 2, the isolation surface of the first electrode 4 (not shown) and the inner side of the cover 3. The matter is that the inner side of the cover provides an isolation of the second electrode. In other not shown embodiments, the second electrode may be arranged on the inner side of the cover and it may be arranged inside the cover. In the case where the second electrode is arranged inside the cover, the inner side of the cover may as well be part of the dielectric material. The capacitor 9 is connected to a processing unit 6.

The processing unit 6 may be a multivibrator or oscillator and said capacitance is an active component in said multivibrator or oscillator so that a frequency of oscillation or a pulse width of a digital output, is a function of the capacitance of said capacitor 9, which also is a function of the water content in the moist plant growth medium 2. The matter is that the electrode for instance is connected to a special PWM-oscillator (PWM: pulse width modulation) that generates a high to low shifting output signal. The period t₁, where the output signal is high, is constant. The period t₂, where the level is low, is proportional to the capacity of the electrode and the water content. The mentioned PWM-oscillator circuitry has the advantage that it has a very low cost. Other types of capacitor sensitive electronic circuits like a dual slope integrator may as well also be implemented for the PWM signal generation.

The cover 3 may preferably be made of polymer materials, such as polyethylene, polypropylene, polyester, polycarbonate or similar materials which may be extruded to a thin plastic foil.

According to the invention, it is possible to position the first electrode 4 in a predetermined area of the moist plant growth medium and to equip the cover with predetermined slits or dedicated areas wherein the plants are placed or inserted so that the positioned first electrode provides an substantially accurate determination of the water content in the areas where the plants are placed. Furthermore, the cover may comprise openings for insertions of plants into the moist plant growth medium or for irrigating purposes.

Preferably, the cover may have a substantially rectangular configuration.

In Fig. 4 the capacitor 9 of the measuring device 1 is shown schematically in the form as a circuit consisting of the first electrode 4 and the second electrode 5, said circuit being connected to the processing unit 6.

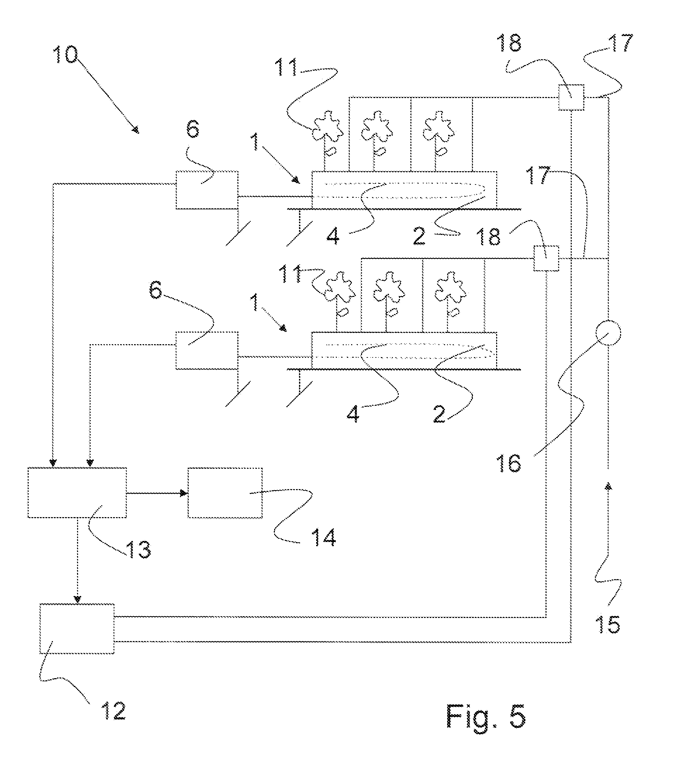

In Fig. 5 an irrigation system 10 for irrigating individual plants 11 or a group of plants growing in moist plant growth media 2 is shown schematically. The irrigation system 10 comprises one or more measuring device(s) 1 according to the invention. The irrigation is controlled selectively by an irrigation controller 12, said irrigation controller 12 being adapted to controlling a supply of water and fertilizer to individual plants 11 or groups of plants in view of a water content measured in the moist plant growth media 2 of an individual plant, or in the case where the measurement by one plant is representative for a group of plants, for the water content in this group of plants.

In the embodiment shown in Fig. 5 two measuring devices 1 are shown. The measuring devices comprise two moist plant growth media 2, wherein a first electrode 4 is shown positioned inside the moist plant growth media 2. In each moist plant growth medium 2, three plants 11 are placed. The moist plant growth media 2 are furthermore connected to processing units 6 which again are connected to a common multiplexer and/or processor based system (CPU) 13, which are adapted to do the calibrating as well as measuring and feed WC values from each measuring device 1 to the irrigating computer system, which may regulate the irrigation selectively in the regions covered by each moist plant growth medium 1. The multiplexer and/or processor based system (CPU) 13 may be connected to a display 14.

The embodiment shown may as well comprise a water supply 15, which is connected to pump 16. From this pump 16, water conduits are guided to the moist plant growth media 2 and valves 18 are arranged at each water conduit. These valves are connected to the irrigation controller 12 and are adapted to open and close the water supply to a specific moist plant growth medium in relation the determined water content in a specific moist plant growth media.

According to the invention, the measuring device 1 may be connected to the irrigation controller 12 by wireless (not shown) or wired connection. The wireless connection may comprise a local wireless transmitter and repeater making a wireless node, said wireless node transmitting, either directly or via other similar wireless nodes, measuring signals with information of the water content, to a central wireless access point connected to the irrigation controller 12. Preferably, said wireless nodes may be battery powered for easier and more flexible installation of the nodes.

Furthermore, one or more sensors (not shown) may be arranged in connection with the moist plant growth media 2, and may be connected to the irrigation controller 12, said sensors being arranged for measuring the humidity of an environment surrounding the moist plant growth media, for measuring the temperature and/or for measuring the strength of the sun light.

Although the invention above has been described in connection with preferred embodiments of the invention, it will be evident for a person skilled in the art that several modifications are conceivable without departing from the invention as defined by the following claims.

## Claims

1. A measuring device (1) for determining a water content in a moist plant growth medium (2), said moist plant growth medium (2) being enclosed in a cover (3), said cover (3) comprising an inner side which is in contact with said moist plant growth medium (2), said measuring device (1) comprising a capacitor (9) having a capacitance, said capacitor (9) comprising a first electrode (4), a second electrode (5) and a dielectric material, and a processing unit (6), **characterised in that** said first electrode (4) has a surface isolation (8) and is permanently positioned in said moist plant growth medium (2), said cover (3) comprising an electrically conductive material and said second electrode (5) being the electrically conductive material, and said dielectric material comprising at least the surface isolation (8) of the first electrode (4) and the moist plant growth medium (2), whereby said moisture dependent capacitance of the capacitor (9) is a function of the water content absorbed in the moist plant growth medium (2) nearby and/or along the first electrode (4).

2. A measuring device (1) according to claim 1, wherein the first electrode (4) has a predetermined length (7), so that a variable electric capacity inside the moist plant growth medium (2), which the first electrode (4) is in contact with, is created and is measurable.

3. A measuring device (1) according to any one of the claims 1 to 2, wherein the first electrode (4) is positioned in the moist plant growth medium (2) in a predetermined pattern, such as hairpin-slings, meander, zigzag, spiral, coil or similar two- and 3 dimensional patterns or combinations of these patterns.

4. A measuring device (1) according to claim 1, wherein the first electrode (4) is embedded and evenly distributed inside the moist plant growth medium (2), or selectively concentrated in selected areas of the moist plant growth medium (2).

5. A measuring device (1) according to claim 1, wherein the processing unit (6) is a multivibrator or oscillator, and said capacitance is an active component in said multivibrator or oscillator so that a frequency of oscillation or a pulse width of a digital output, is a function of the capacitance of said capacitor (9), which also is a function of the water content in the moist plant growth medium (2).

6. A measuring device (1) according to any of the preceding claims, wherein the second electrode is arranged on the inner side of the cover, on the outer side of the cover or within the cover.

7. A moist plant growth medium (2), said moist plant growth medium (2) being enclosed in a cover (3), said cover (3) comprising an inner side which is in contact with said moist plant growth medium (2), said moist plant growth medium (2) comprising a capacitor (9) having a capacitance, said capacitor (9) comprising a first electrode (4), a second electrode (5) and a dielectric material, **characterised in that** said first electrode (4) has a surface isolation (8) and is permanently positioned in said moist plant growth medium (2), said cover (3) comprising an electrically conductive material and said second electrode (5) being the electrically conductive material, and said dielectric material comprising at least the surface isolation (8) of the first electrode (4) and the moist plant growth medium (2).

8. A moist plant growth medium (2) according to claim 7, wherein the first electrode (4) is embedded and evenly distributed inside the moist plant growth medium (2), or selectively concentrated in selected areas of the moist plant growth medium (2).

9. A moist plant growth medium (2) according to any of claims 7 to 8, wherein the second electrode is arranged on the inner side of the cover, on the outer side of the cover or within the cover.

10. A method for manufacturing a moist plant growth medium (2) according to any one of the claims 7 to 9, comprising the steps of:
- providing the moist plant growth medium (2) with a predetermined size and volume,
- positioning a first electrode (4) having a surface isolation (8) in the moist plant growth medium (2),
- enclosing the moist plant growth medium (2) inside a cover (3) so that an inner side of the cover (3) is in contact with the moist plant growth medium (2), said inner side of the cover (3) comprising an electrically conductive material, and
- closing the cover for instance by thermo welding.

11. An irrigation system (10) for irrigating individual plants (11) or a group of plants growing in moist plant growth media (2), wherein the irrigation is controlled selectively by an irrigation controller (12), said irrigation controller (12) being adapted to controlling a supply of water and/or fertilizer to individual plants (11) or groups of plants in view of a water content measured in the moist plant growth medium (2) of an individual plant (11), or in the case where the measurement by one plant (11) is representative for a group of plants, for the water content in this group of plants, said system (10) comprises a measuring device (1) according to any one of the claims 1 to 6.

12. An irrigation system (10) according to claim 11, wherein the measuring device (1) is connected to the irrigation controller (12) by wireless or wired connection.

13. An irrigation system (10) according to claim 12, wherein the wireless connection comprises a local wireless transmitter and repeater making a wireless node, said wireless node transmitting, either directly or via other similar wireless nodes, measuring signals with information of the water content, to a central wireless access point connected to the irrigation controller (12).

14. An irrigation system (10) according to claim 13, wherein said wireless nodes are battery powered for easier and more flexible installation of the nodes.

15. An irrigation system (10) according to any of the claims 11 to 14, wherein one or more sensors are arranged in connection with the moist plant growth medium (2), and are connected to the irrigation controller (12), said sensors being arranged for measuring the humidity of an environment surrounding the moist plant growth medium (2), for measuring the temperature and/or for measuring the strength of the sun light.
